# FASCICULE DE BREVET EUROPEEN

(11) **EP 1 133 429 B1**
(45) Date de publication et mention de la délivrance du brevet: **18.09.2002**
(21) Numéro de dépôt: 99972593.0
(22) Date de dépôt: 12.11.1999
(51) Int. Cl.: B62D 49/02

(54) **EQUIPEMENT DE RELEVAGE AVANT POUR TRACTEUR A CHENILLES ET TRACTEUR A CHENILLES MUNI DE CET EQUIPEMENT**
HEBEZEUG AM VORDERSEITE EINEM RAUPENSCHLEPPER UND DAMIT AUSGERÜSTETEN RUPENSCHLEPPER
FRONT LIFTING EQUIPMENT FOR CRAWLER TRACTOR AND CRAWLER TRACTOR EQUIPPED THEREWITH

(30) Priorité: 19.11.1998 FR 9814536
(43) Date de publication de la demande: 19.09.2001
(73) Titulaire: Defrancq, Hubert, 02190 Guignicourt (FR)
(72) Inventeur: Defrancq, Hubert, 02190 Guignicourt (FR)
(74) Mandataire: Michardière, Bernard
(86) Numéro de dépôt international: FR9902777
(87) Numéro de publication internationale: WO00030918

(56) Documents cités:
- DE-A- 2 161 154
- US-A- 4 230 199

## Description

L'invention est relative à un équipement de relevage avant pour tracteur à chenilles, à vocation agricole, lequel tracteur présente un déport important de sa partie avant relativement à une poutre transversale intermédiaire sur laquelle est fixé de chaque côté, un train de chenilles, réglable transversalement pour ajustement de la voie du tracteur, un essieu étant prévu à l'arrière du tracteur, l' équipement comprenant un organe de renforcement disposé de chaque côté du tracteur, se prolongeant vers l'avant au-delà de la poutre intermédiaire, et des moyens de liaison entre la partie avant de l'organe de renforcement et un point d'accrochage d'une pièce soumise aux efforts engendrés par une charge agissant sur le relevage avant.

Les générations actuelles de tracteurs à chenilles, à vocation agricole, présentent trois principales caractéristiques relativement aux versions classiques de ces tracteurs :
- des chenilles en caoutchouc ;
- un poids réduit par kilowatt de puissance pour éviter de trop tasser le sol ;
- un déport important de la partie avant du tracteur pour que celui-ci soit équilibré malgré le couple cabreur engendré par un outil entraîné à l'arrière du tracteur, en vue d'assurer un contact régulier des chenilles pour favoriser la transmission de la puissance et éviter le tassement du sol.

La poutre intermédiaire constitue l'élément porteur le plus en avant de l'ossature du tracteur à chenilles. Cette poutre intermédiaire se trouve pratiquement à mi-longueur du tracteur. Lorsqu'une charge est portée à l'avant du tracteur, un effort de flexion considérable est produit sur la partie du tracteur située en avant de la poutre intermédiaire. Il faut donc pouvoir contrôler cet effort de flexion pour éviter de provoquer une défaillance mécanique du tracteur.

Un relevage avant n'est pas installé systématiquement sur tous les tracteurs à chenilles. Pour éviter un surcoût aux utilisateurs de tracteurs non équipés de relevage avant, et dans le souci de limiter le poids total du tracteur, les constructeurs de tracteurs n'organisent pas l'ossature du tracteur en fonction des efforts créés par un éventuel relevage avant.

Il importe donc pour les constructeurs de relevages avant, installés ultérieurement, de prévoir une structure de renforcement du tracteur à chenilles pour éviter qu'il soit soumis à des efforts inacceptables. Un organe de renforcement disposé de chaque côté du tracteur fait partie de cette structure de renforcement.

Un tel organe de renforcement entraîne des inconvénients, en particulier les suivants.

Les trains de chenilles sont réglables, dans le sens transversal, pour permettre de modifier la voie du tracteur. Ce réglage est obtenu par déplacement de la zone de fixation du train sur la poutre intermédiaire. La présence d'un organe de renforcement disposé entre les chenilles et le corps du tracteur conduit à limiter les possibilités de réglage de la voie du tracteur, notamment lorsqu'il s'agit de donner à cette voie la valeur minimale.

En outre, la présence d'un organe de renforcement en partie basse du tracteur favorise une accumulation de déchets sous le tracteur.

L'invention a pour but, surtout, de fournir un équipement de relevage avant pour tracteur à chenilles qui permette d'éviter les inconvénients évoqués ci-dessus, tout en restant d'une construction et d'une mise en oeuvre relativement simple et économique, et tout en assurant un renforcement suffisant du tracteur.

Selon l'invention, un équipement de relevage avant pour tracteur à chenilles à vocation agricole, du genre défini précédemment, est tel que chaque organe de renforcement comprend un flanc d'épaisseur réduite, sensiblement parallèle au plan vertical médian du tracteur, situé au voisinage du corps de tracteur, la hauteur du flanc étant prévue pour assurer une résistance mécanique satisfaisante, l'épaisseur du flanc étant telle qu'un réglage de voie étroite des chenilles du tracteur ne soit pas gêné.

Avantageusement, le flanc a une épaisseur non supérieure à 50 mm, en particulier non supérieure à 30 mm.

Le flanc passe au-dessus de, et prend appui sur, la poutre intermédiaire et se prolonge vers l'arrière pour être relié à l'essieu arrière.

Le flanc peut être formé de deux parties assemblées par un joint de liaison, en particulier incliné. Le joint de liaison est situé, de préférence, sensiblement au niveau de la poutre intermédiaire et la partie du flanc située en avant du joint est plus épaisse que la partie du flanc située en arrière du joint.

Le relevage avant peut comprendre un bâti, en particulier en U renversé, portant les trois points d'accrochage pour un outil, ce bâti étant articulé de chaque côté en partie basse arrière sur une extrémité d'un longeron articulé à son autre extrémité sur un pivot porté par l'ossature du tracteur, le bâti étant retenu de chaque côté par un moyen tendeur, notamment une vis tendeur, prévue entre un point haut du bâti et un point solidaire du longeron, les moyens de liaison étant formés par des vérins permettant de relever ou d'abaisser les longerons et le bâti.

Les vis tendeurs peuvent être munies d'une partie coulissante pour autoriser un suivi longitudinal du relief.

Selon une autre possibilité, l'équipement comporte un relevage fixé à l'avant du tracteur, avec vérins et bras articulés, l'articulation des bras étant située à l'avant du tracteur, et les moyens de liaison sont prévus entre l'extrémité haute avant du flanc, et un point d'accrochage situé plus en avant et plus bas solidaire de l'ossature du tracteur, en particulier situé sur une pièce rapportée et fixée sur le tracteur et servant à la fixation du relevage.

Les moyens de liaison sont avantageusement convergents d'arrière en avant.

On peut prévoir, de chaque côté du tracteur, une biellette articulée , en particulier sur rotule, à chaque extrémité pour établir une liaison transversale entre l'extrémité avant haute du flanc et un point de l'ossature du tracteur, afin de lutter contre les efforts transversaux agissant sur l'extrémité avant du flanc.

Chaque moyen de liaison peut être constitué par une barre rigide, en particulier précontrainte.

Selon une solution avantageuse, les moyens de liaison sont constitués, de chaque côté, par un vérin alimenté en parallèle avec les vérins de relevage avant.

Un capteur de pression et un clapet anti-retour, commandé par le capteur de pression, sont avantageusement disposés sur la canalisation d'alimentation des vérins formant moyens de liaison de manière à couper la communication entre ces vérins et les vérins de relevage lorsqu'une valeur déterminée de pression est dépassée.

L'invention est également relative à un tracteur à chenilles muni d'un équipement de relevage avant tel que défini précédemment.

L'invention consiste, mises à part les dispositions exposées ci-dessus, en un certain nombre d'autres dispositions dont il sera plus explicitement question ci-après à propos d'exemples de réalisations particuliers décrits en détail avec référence aux dessins ci-annexés mais qui ne sont nullement limitatifs.

La Figure 1, de ces dessins, est une vue de côté schématique de l'avant d'un tracteur à chenilles muni d'un équipement de relevage avant selon l'invention.

La Figure 2 est une vue de dessus schématique de la partie du tracteur de Fig.1.

La Figure 3 est une vue à plus grande échelle, suivant la flèche III sur Fig.1, du bâti avant avec les trois points d'accrochage pour un outil.

La Figure 4 est une vue suivant la flèche IV sur Fig. des longerons avec liaison de rigidification.

La Figure 5 est une vue schématique de côté avec parties enlevées, d'un tracteur à chenilles muni d'une variante de l'équipement de relevage avant.

La Figure 6 est une vue de côté des éléments constitutifs de l'équipement de Fig.5.

La Figure 7 est une vue de dessus par rapport à la Figure 6.

La Figure 8 est une vue de dessus du détail du joint de liaison, à plus grande échelle.

La Figure 9 est une vue de côté montrant une variante du joint de liaison.

La Figure 10 est une vue schématique de côté d'une variante de l'équipement de Fig.5.

La Figure 11 est un schéma de l'installation hydraulique de Fig.10.

La Figure 12, enfin, montre à plus grande échelle un détail vu de gauche par rapport à Fig.5.

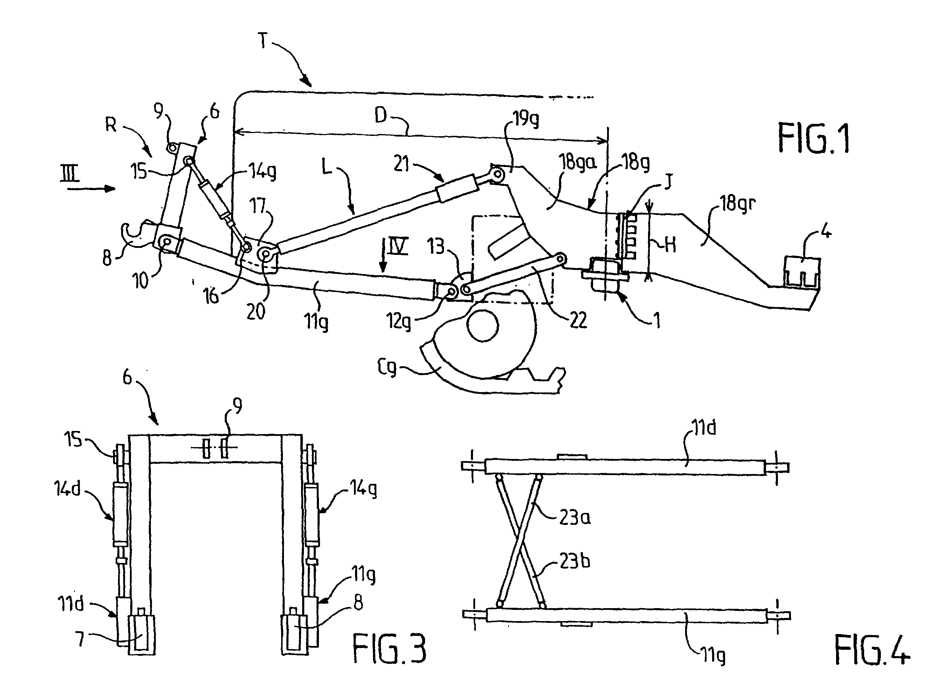

En se reportant aux Figures 1 et 2 des dessins, on peut voir un tracteur T à chenilles Cd, Cg, destiné à l'agriculture. Ce tracteur présente un déport D (Fig.1) important de sa partie avant relativement à une poutre transversale intermédiaire 1 à laquelle est fixé, de chaque côté, un train de chenilles. Le déport D peut être de l'ordre de la moitié de la longueur du tracteur. La poutre 1 est orthogonale à l'axe longitudinal du tracteur, sensiblement à mi-longueur du tracteur, et constitue l'élément porteur de l'ossature du tracteur situé le plus en avant. Comme visible sur Fig.2 les zones latérales extrêmes de la poutre 1 comportent sur-leurs bords avant et arrière une rangée de trous 2d, 2g et 3d, 3g pour permettre de fixer le train de chenilles correspondant Cd, Cg à une distance plus ou moins grande de l'axe longitudinal A-A du tracteur. On peut ainsi modifier la voie V et l'adapter à l'écartement des rangées de plantes d'un champ où va travailler le tracteur.

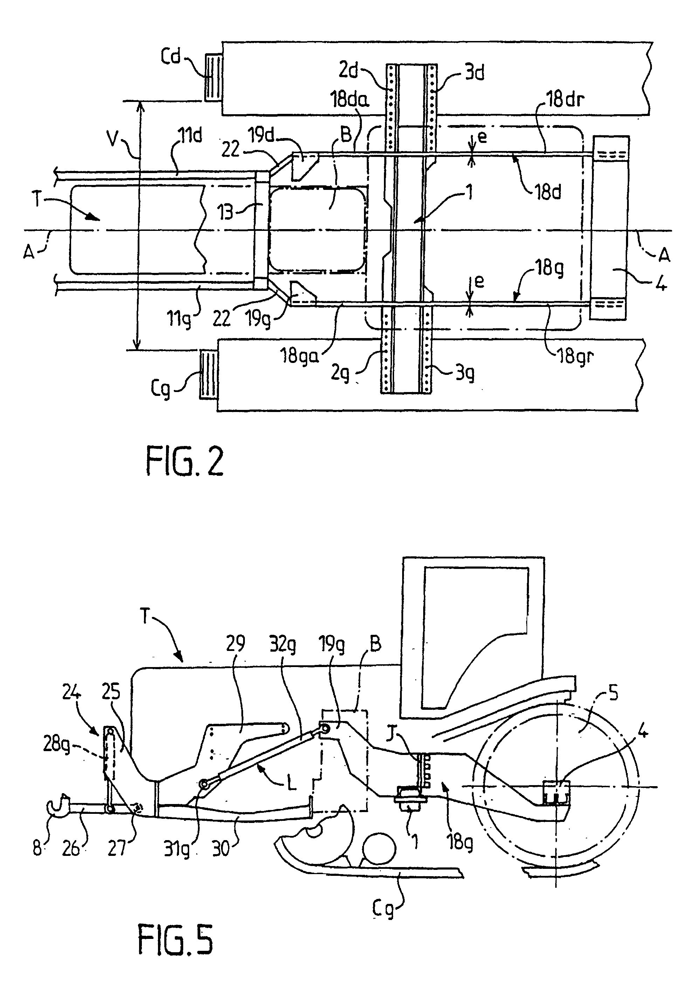

Un essieu 4 est prévu à l'arrière du tracteur et est supporté, à chaque extrémité, par une roue arrière 5 (voir Fig.5) d'un train de chenilles.

Un relevage avant R équipe le tracteur. Ce relevage comprend un bâti 6 rigide portant les trois points d'accrochage pour un outil, à savoir deux points d'accrochage bas 7, 8 formés par des mains d'accrochage et un point d'accrochage médian supérieur 9. Le bâti 6 a de préférence la forme d'un U renversé comme visible sur Fig. 3. Le bâti 6 est monté en partie basse, de chaque côté, sur une articulation 10, de préférence une rotule, située à l'extrémité d'un longeron 11d, 11g.

Bien entendu, le tracteur T est généralement équipé aussi d'un relevage arrière (non représenté) pour tirer un outil, tandis qu'un autre outil est accroché à l'avant.

Chaque longeron 11d, 11g est articulé à son extrémité arrière sur un pivot 12d, 12g, de préférence une rotule, porté par un support 13 transversal fixé à l'avant d'une partie de l'ossature du tracteur, par exemple à l'avant de la boîte de transmission B.

Le bâti 6 est retenu, de chaque côté, par une vis tendeur 14d, 14g, de préférence munie d'une rotule à chaque extrémité et accrochée à un point haut 15 du bâti et à un point 16 du longeron. De préférence, le point d'accrochage 16 est prévu sur une plaque 17 formant gousset soudée au longeron, dans un plan sensiblement vertical. Les vis tendeurs 14d, 14g peuvent être munies d'une partie coulissante pour autoriser un suivi longitudinal du relief par l'outil accroché au bâti 6, en raison de l'oscillation possible de ce bâti 6 autour des points 10.

Un organe de renforcement comprenant un flanc 18d, 18g, sensiblement parallèle au plan vertical médian du tracteur, est disposé de chaque côté du tracteur et est fixé à la poutre intermédiaire 1 ainsi qu'à l'essieu arrière 4.

Chaque flanc 18d, 18g est découpé dans une plaque, en général une tôle d'acier, d'épaisseur e non supérieure à 50 mm, avantageusement non supérieure à 30 mm. Le flanc est disposé contre le corps du tracteur, à l'intérieur des chenilles Cd, Cg.

Vu de côté (Figs.1,5,6,9) le flanc de renforcement 18d, 18g a une forme rappelant celle d'un phoque dont la tête relevée constituerait la partie avant 19d, 19g du flanc située en avant de la poutre 1 et plus haut que cette poutre. La partie centrale du flanc 18d, 18g présente la hauteur H la plus importante ; cette partie centrale chevauche la poutre intermédiaire 1 et prend appui dessus. Le flanc 18d, 18g s'abaisse vers l'arrière, en formant une sorte de queue, et se prolonge jusqu'à l'essieu arrière 4 auquel il est fixé.

Les possibilités de réglage de voie V des chenilles ne sont pas limitées en raison de la minceur des flancs de renforcement 18d, 18g lesquels présentent toutefois une résistance suffisante à la flexion en raison de leur hauteur H dans la zone la plus sollicitée. Cette hauteur H est de préférence supérieure à 30 cm.

Un moyen de liaison L est prévu entre la partie haute avant 19d, 19g du flanc de renforcement et un point d'accrochage 20 situé sur une pièce de l'avant du tracteur soumise aux efforts créés par la charge accrochée au bâti 6.

Selon le mode de réalisation des Fig. 1 et 2, les moyens de liaison L sont constitués, de chaque côté, par un vérin 21 permettant de relever ou d'abaisser les longerons 11d, 11g et avec eux le bâti 6.

A la partie avant 19d, 19g du flanc est accrochée la partie arrière du moyen de liaison L. L'effort de traction exercé par le moyen de liaison sur la partie haute avant 19d, 19g du flanc crée, relativement à la poutre 1, un moment qui est équilibré par la réaction d'appui de la partie arrière du flanc par rapport à l'essieu 4.

Avantageusement, le point d'accrochage 20 est prévu sur la plaque gousset 17, légèrement en arrière du point d'accrochage 16.

Les goussets 17 permettent un renforcement aisé de la zone des longerons 11d, 11g où se concentrent les contraintes.

La partie arrière des longerons 11d, 11g étant articulée sur un support 13 relié à l'ossature du tracteur, il est possible d'optimiser la fabrication du cadre constitué par les longerons 11d, 11g avec une largeur réduite pour éviter d'interférer sur les possibilités de réglage de la voie des chenilles.

Une barre de liaison 22 est prévue de chaque côté pour relier une extrémité transversale du support 13 à l'élément de renforcement 18d, 18g afin d'éviter de transmettre les contraintes latérales subies par le support 13 au tracteur, et pour rigidifier l'ensemble.

Une liaison de rigidification est prévue entre les deux longerons 11d, 11g et peut être constituée par une poutre transversale soudée à ces longerons vers l'extrémité avant.

Cette liaison de rigidification peut aussi être réalisée comme illustré sur Fig.4 à l'aide de deux vis tendeurs 23a, 23b croisées, reliées à chaque extrémité respectivement aux longerons 11d, 11g par des articulations, de préférence à rotule, autorisant un mouvement vertical relatif des longerons 11d, 11g. Une telle construction permet un suivi transversal du relief, par l'outil accroché au relevage avant, sous réserve que les vis tendeurs 14d, 14g soient munies d'une partie coulissante.Les longerons 11d, 11g ainsi assemblés forment un cadre.

Le comportement d'un tel équipement lorsqu'une charge est accrochée au relevage avant R résulte des explications qui précèdent.

En raison du montage pivotant du bâti 6 sur les articulations 10 et de la retenue en partie haute de ce bâti exercée par les vis tendeurs 14d, 14g inclinées vers l'arrière, les contraintes de flexion sur la partie supérieure du bâti 6 sont réduites, et il n'y a pas de concentration de contraintes au niveau de la partie basse c'est à dire au niveau des articulations 10.

Les efforts créés par une charge (non représentée) accrochée aux points 7,8,9 sont transmis par les moyens de liaison L aux flancs de renforcement 18d, 18g et, par ces flancs, aux éléments porteurs résistants du tracteur à savoir la poutre intermédiaire 1 et l'essieu arrière 4.

Les flancs 18d , 18g se présentent suivant une dimension transversale réduite ce qui évite une accumulation de déchets sous le tracteur.

Les Figures 5 à 7 montrent une variante de réalisation avantageuse faisant intervenir un relevage avant 24 semblable à ceux utilisés sur les tracteurs à roues. Un tel relevage avant permet de bénéficier d'une géométrie d'attelage satisfaisante, en particulier avec des outils de travail dans le sol, et présente une bonne résistance mécanique.

Le relevage 24 comporte un bâti 25 fixé à l'avant du tracteur. De chaque côté du bâti un bras de levage 26 fait saillie vers l'avant, ce bras étant articulé en 27 à son extrémité arrière sur le bâti 25, pratiquement au niveau de l'extrémité avant du tracteur T. Les points bas d'accrochage 7, 8 pour l'outil sont prévus aux extrémités avant des bras 26. Un vérin 28d,28g de préférence sensiblement vertical , est prévu de chaque côté du relevage 24 entre un point d'accrochage haut du bâti 25 et un point d'accrochage bas sur le bras correspondant 26.

Le bâti 25 est fixé à l'arrière, de chaque côté du tracteur, sur une plaque 29 rapportée, fixée par des vis sur l'ossature du tracteur. Une poutre de poussée 30, disposée dans l'axe du tracteur, est fixée, à son extrémité avant, sur la partie arrière basse du bâti 25 .

L'autre extrémité de la poutre 30 est fixée sur une paroi rigide de l'ossature du tracteur, par exemple sur la boîte de transmission B.

On retrouve, de chaque côté du tracteur, les flancs de renforcement 18d, 18g chevauchant la poutre intermédiaire 1 et prenant appui par leur prolongement relativement à l'essieu arrière 4. L'extrémité haute avant 19d, 19g du flanc de renforcement est reliée par le moyen de liaison L à un point d'accrochage 31d, 31g solidaire de l'ossature du tracteur T et situé vers l'avant, en partie basse. Le point d'accrochage 31d, 31g peut être prévu sur la plaque 29 elle-même fixée à l'ossature du tracteur.

Chaque moyen de liaison L est constitué par une barre 32d, 32g de préférence précontrainte.

La liaison de chaque extrémité de. la barre 32g avec la partie 19g et le point 31g est avantageusement assurée par rotule. Il en est de même pour l'autre barre 32d.

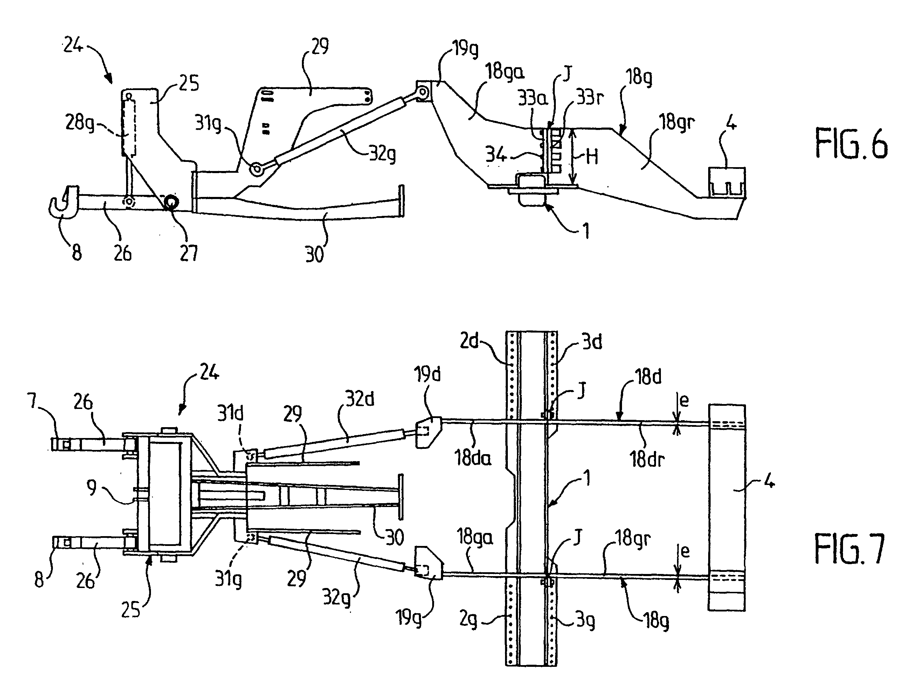

De préférence, comme visible sur Fig.7, les deux barres 32d, 32g convergent vers le bas ce qui confère à l'ensemble une résistance aux efforts transversaux.

Les barres 32d, 32g font office de tendeurs précontraints et ont pour fonction de. retenir la partie avant du tracteur et d'éviter la-flexion induite par une charge supportée par le relevage 24.

L'encombrement des pièces du tracteur pose un problème pour l'installation des flancs 18d, 18g contre le corps du tracteur, à l'intérieur des chenilles.

Pour l'installation de flancs 18d, 18g d'une hauteur satisfaisante, chaque flanc est constitué de deux parties 18da, 18dr et 18ga, 18gr reliées l'une à l'autre par un joint de liaison J situé sensiblement au niveau de la face arrière de la poutre intermédiaire 1.

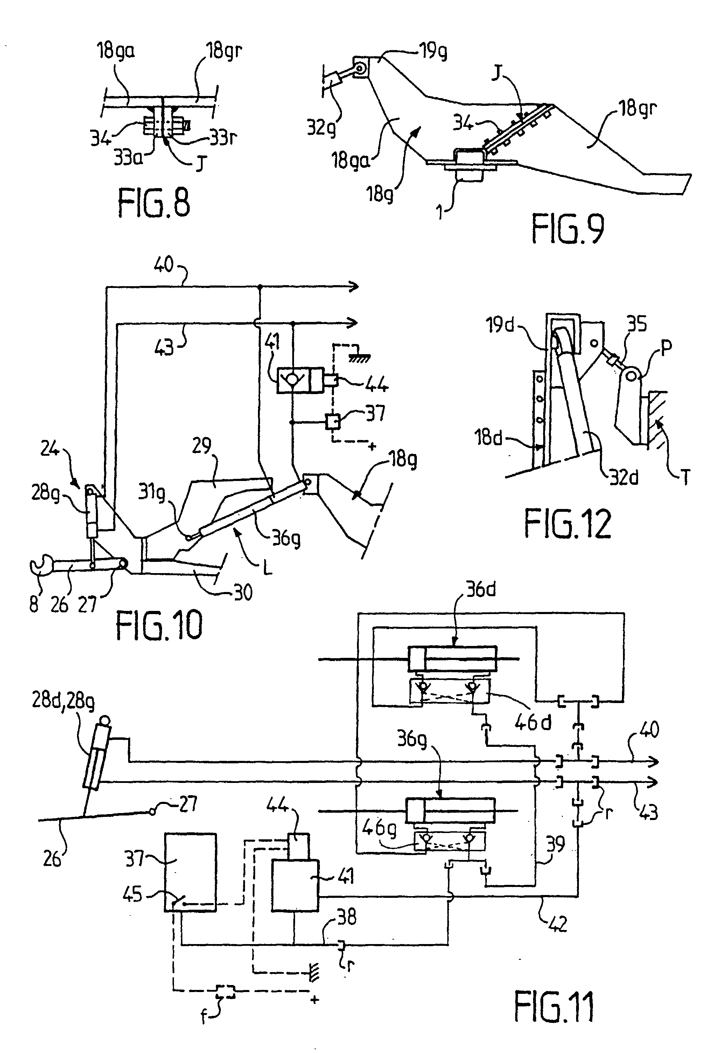

Du fait de la minceur du flanc, le joint de liaison J, comme illustré sur Fig.8, comporte des barrettes 33a, 33r, avantageusement renforcées par des goussets, verticales dont le plan est perpendiculaire à celui du flanc. Ces barrettes sont soudées en bordure des parties 18ga et 18gr et sont traversées par des trous dans lesquels passent des boulons d'assemblage 34.

Au lieu de disposer verticalement le joint J comme illustré sur Fig.6, on peut le disposer suivant une direction inclinée comme illustré sur Fig.9. La longueur du joint J est alors augmentée et le nombre de boulons d'assemblage 34 est supérieur à celui de la disposition de Fig.6, de sorte que la résistance mécanique du joint J est améliorée.

La partie 18da, 18ga du flanc située en avant du joint J est plus sollicitée que la partie 18dr, 18gr du flanc située en arrière du joint J. L'épaisseur de la partie arrière 18dr, 18gr peut être plus faible que celle de la partie avant.

Comme visible sur Fig.7, les barres 32d, 32g qui travaillent suivant un angle par rapport à la direction de progression du tracteur ( ceci permet une amélioration de la résistance aux efforts latéraux ) entraînent cependant des efforts de flexion latérale sur la partie avant 19d, 19g du flanc de renforcement.

Pour éviter la flexion causée par de tels efforts, on prévoit une biellette 35 (voir Fig.12) qui relie l'extrémité avant 19g , 19d à un point d'accrochage P sur la structure du tracteur, la biellette 35 étant articulée à chacune de ses extrémités. Cette biellette 35 est située sensiblement dans un plan vertical transversal, perpendiculaire à la direction de progression du tracteur. En outre la biellette 35 est de préférence inclinée sensiblement à 45° sur l'horizontale, le point P étant le point bas.

Lorsque la contrainte s'applique sur le flanc 18d, 18g, la déformation est contrôlée pour ne s'opérer que dans le sens longitudinal, sans entraîner de contrainte de cisaillement sur la structure du tracteur.

Le montage décrit précédemment avec référence aux Figures 5 à 7, avec barres 32d, 32g en particulier précontraintes est intéressant, mais fonctionne essentiellement avec des relevages avant 24 utilisés en simple effet, c'est-à-dire soumis à un effort qui sollicite les bras 26 vers le bas ( sens contraire d'horloge selon Fig.5 ).

Lors de l'utilisation d'outils en double effet, par exemple "tasse avant", "lame bull", l'effort exercé sur les bras 26 peut être inversé et dirigé vers le haut. L'effort a donc tendance à soulever l'avant du tracteur. Dans un tel cas, si la barre 32d, 32g est soumise à une précontrainte, celle-ci s'ajoute à l'effort induit par le relevage avant et peut conduire à une contrainte inversée excessive.

La variante de réalisation de Figs.10 et 11 vise à régler ce problème. Les moyens de liaison L ne sont plus constitués par des barres précontraintes, mais par des vérins 36d, 36g alimentés en parallèle avec les vérins 28d, 28g du relevage avant 24.

Les vérins 36d, 36g, font office de tendeurs et sont dimensionnés en relation avec la section des vérins de levage 28d, 28g.

La tension mécanique appliquée par les vérins 36d, 36g est alors proportionnelle à la charge appliquée sur le relevage avant 24, quelque soit le sens de fonctionnement.

Toutefois, la géométrie particulière d'un relevage avant, pour une charge donnée, induit un accroissement de la pression dans les vérins 28d, 28g du relevage à mesure que la charge est soulevée par les bras 26. Dans ces conditions, on risque d'appliquer dans les vérins tendeurs 36d, 36g une pression de liquide trop élevée lorsque la charge accrochée au relevage avant 24 arrive dans une position relativement haute.

Pour éviter cet inconvénient, on prévoit comme illustré sur Fig. 11 un capteur de pression 37 branché sur une conduite 38 reliée à une conduite 39 reliant elle-même une chambre, par exemple la chambre côté tige, du vérin 36d à la chambre semblable du vérin 36g. Les chambres des vérins 36d, 36g situées de l'autre côté du piston sont reliées en parallèle à une conduite 40 d'évacuation de l'huile vers un réservoir à basse pression ou à pression atmosphérique.

La conduite 38 est reliée par l'intermédiaire d'un clapet anti-retour 41 à une canalisation 42 reliée à une canalisation 43 amenant l'huile sous pression dans les vérins 28d, 28g du relevage avant pour provoquer la montée des bras 26.

Les différents raccords entre tronçons de conduite sont schématisés et désignés par r.

Le clapet anti-retour 41 est piloté hydrauliquement, ou électriquement comme illustré sur Fig.11, par le capteur de pression 37.

Le pilotage électrique du clapet 41 est assuré par une bobine électromagnétique 44 dont l'alimentation électrique à partir du pôle + d'une batterie (non représentée) est assuré par un contact électrique 45 branché sur la ligne d'alimentation de la bobine 44.

L'autre borne de la bobine 44 est reliée à la masse. La fermeture ou l'ouverture du contact 45 est commandée par le capteur de pression 37.

Le fonctionnement de l'installation hydraulique de Figs.10 et 11 est le suivant.

Lorsque la pression dans la conduite 43, c'est-à-dire dans les vérins 28d, 28g du relevage avant 24 dépasse un seuil déterminé, le capteur de pression 37, soumis à cette pression présente dans les conduites 42 et 38, commande la fermeture du contact 45. Ceci provoque la mise en action du clapet anti-retour 41 qui isole la conduite 38 de la conduite 42. Les vérins 36d, 36g sont ainsi isolés des vérins de levage 28d, 28g, afin d'éviter d'accroître inutilement la tension mécanique produite par ces vérins 36d, 36g.

Lorsque la pression dans les vérins de relevage 28d, 28g chute à une valeur inférieure à la pression réglée par le capteur 37, l'huile s'échange de nouveau librement entre vérins de levage 28d, 28g et vérins tendeurs 36d, 36g.

On peut prévoir de gérer en parallèle le vérin 36d situé du côté droit et le vérin 36g situé du côté gauche pour bénéficier de la rigidification latérale assurée par les vérins tendeurs 36d, 36g lorsqu'ils travaillent indépendamment. En effet, si les chambres des vérins 36d, 36g sont en communication par la canalisation 39, la rigidification disparaît puisqu'il y a transfert du liquide d'un vérin tendeur à l'autre.

Pour gérer en parallèle les vérins tendeurs il suffit d'installer ( comme ilustré sur Fig.11) un clapet anti-retour double , piloté hydrauliquement, 46d, 46g sur chaque vérin tendeur 36d,36g qui fonctionne alors indépendamment de l'autre. En cas d'efforts latéraux, un accroissement de pression dans l'un des vérins tendeurs 36d ou 36g n'est pas transmis à l'autre vérin tendeur 36g ou 36d du fait du clapet anti-retour correspondant empêchant tout écoulement d'une chambre de l'un des vérins tendeurs vers une chambre de l'autre vérin tendeur. Grâce au pilotage, le fonctionnement de chaque vérin tendeur à partir des conduites 43 et 40 n'est pas modifié.

## Revendications

1. Equipement de relevage avant pour tracteur à chenilles, à vocation agricole, présentant un déport important de sa partie avant relativement à une poutre transversale intermédiaire sur laquelle est fixé, de chaque côté, un train de chenilles, réglable transversalement pour ajustement de la voie du tracteur, un essieu étant prévu à l'arrière du tracteur, lequel équipement comprend un organe de renforcement disposé de chaque côté du tracteur et fixé à la poutre intermédiaire ainsi qu'à l'essieu arrière, et des moyens de liaison entre l'organe de renforcement et un point d'accrochage d'une pièce soumise aux efforts engendrés par une charge agissant sur le relevage avant, et tel que chaque organe de renforcement comprend un flanc (18d,18g) d'épaisseur (e) réduite, sensiblement parallèle au plan vertical médian du tracteur, situé au voisinage du corps de tracteur à l'intérieur des chenilles (Cd,Cg), la hauteur du flanc étant prévue pour assurer une résistance mécanique satisfaisante, l'épaisseur (e) du flanc (18d,18g) étant telle qu'un réglage de voie étroite des chenilles du tracteur ne soit pas gêné.

2. Equipement selon la revendication 1, **caractérisé par le fait que** le flanc (18d,18g) a une épaisseur (e) non supérieure à 50 millimètres, en particulier non supérieure à 30 millimètres.

3. Equipement selon la revendication 1 ou 2, **caractérisé par le fait que** le flanc(18d,18g) passe au-dessus de, et prend appui sur, la poutre intermédiaire (1) et se prolonge vers l'arrière pour être relié à l'essieu arrière (4).

4. Equipement selon l'une des revendications 1 à 3, **caractérisé par le fait que** le flanc (18d,18g) est formé de deux parties (18da,18dr;18ga,18gr) assemblées par un joint de liaison (J) , en particulier incliné.

5. Equipement selon la revendications 4, **caractérisé par le fait que** le joint de liaison est situé sensiblement au niveau de la poutre intermédiaire (1) et que la partie (18da, 18ga) du flanc située en avant du joint (J) est plus épaisse que la partie ( 18dr,18gr) du flanc située en arrière du joint (J).

6. Equipement selon l'une des revendications précédentes, **caractérisé par le fait que** le relevage avant (R) comprend un bâti (6), en particulier en U renversé, portant les trois points d'accrochage (7,8,9) pour un outil, ce bâti (6) étant articulé (10) de chaque côté, en partie basse arrière, sur une extrémité d'un longeron (11d,11g) articulé à son autre extrémité sur un pivot (12d,12g) porté par l'ossature du tracteur, le bâti (6) étant retenu de chaque côté par un moyen tendeur (14d,14g), notamment une vis tendeur, prévu entre un point haut (15) du bâti (6) et un point (16) solidaire du longeron (11d,11g), les moyens de liaison (L) étant formés par des vérins (21) permettant de relever ou d'abaisser les longerons (11d,11g), et le bâti (6).

7. Equipement selon la revendication 6 , **caractérisé par le fait que** les vis tendeurs ((14d,14g) sont munies d'une partie coulissante pour autoriser un suivi longitudinal du relief.

8. Equipement selon la revendication 7 , **caractérisé par le fait qu'**une liaison de rigidification entre les longerons est formée par des vis tendeurs croisées (23a,23b) reliées à chaque extrémité respectivement aux longerons (11d,11g) par une articulation autorisant un mouvement vertical relatif des longerons (11d,11g) pour un suivi transversal du relief.

9. Equipement selon l'une des revendications 1 à 6, **caractérisé par le fait qu'**un relevage (24) avec vérins (28d,28g) et bras articulés (26) est fixé à 1' avant du tracteur , l'articulation (27) des bras étant située à l'avant du tracteur, et que les moyens de liaison (L) sont prévus entre l'extrémité haute avant (19d,19g) du flanc et un point d'accrochage (31d,31g) situé plus en avant et plus bas, solidaire de l'ossature du tracteur.

10. Equipement selon la revendication 9 , **caractérisé par** le fait les moyens de liaison (L;32d,32g;36d,36g) sont convergents d'arrière en avant.

11. Equipement selon la revendication 9 ou 10 , **caractérisé par le fait qu'**une biellete (35) articulée, en particulier sur rotule, à chaque extrémité établit une liaison tranversale entre l'extrémité avant haute (19d,19g) du flanc et un point (P) de l'ossature du tracteur.

12. Equipement selon l'une des revendications 9 à 11 , **caractérisé par le fait que** les moyens de liaison (L) comprennent de chaque côté une barre rigide (32d,32g), en particulier précontrainte.

13. Equipement selon l'une des revendications 9 à 11, **caractérisé par** le fait les moyens de liaison (L) comprennent de chaque côté un vérin (36d,36g) alimenté en parallèle avec les vérins (28d,28g). du relevage (24).

14. Equipement selon la revendication 13 , **caractérisé par le fait qu'**un capteur de pression (37) et un clapet anti-retour (41), commandé par le capteur de pression (37) , sont disposés sur la canalisation d'alimentation (38,42) du vérin (36d,36g) formant moyen de liaison, de manière à couper la communication avec le vérin de relevage (28d,28g) lorsqu'une valeur déterminée de pression est dépassée.

15. Equipement selon la revendication 13 ou 14, **caractérisé par le fait qu'** un clapet anti-retour double piloté hydrauliquement (46d, 46g) est installé sur chaque vérin tendeur (36d,36g).

16. Tracteur à chenilles, à vocation agricole, **caractérisé par le fait qu'**il est muni d'un équipement de relevage avant selon l'une des revendications 1 à 15.

## Claims

1. Front lift equipment for a crawler tractor, for agricultural use, having a substantial overhang of its front part relative to an intermediate transverse girder to which there is fixed, on each side, a crawler set, adjustable transversely to adjust the track of the tractor, there being an axle at the rear of the tractor, which equipment comprises a reinforcing member arranged on each side of the tractor and fixed to the intermediate girder and to the rear axle, and means of connection between the reinforcing member and a point of attachment of a part subjected to the forces generated by a load acting on the front lift, and said equipment is such that each reinforcing member has a flank (18d, 18g) of small thickness (e), roughly parallel to the vertical mid-plane of the tractor, located in the vicinity of the body of the tractor inside the crawler tracks (Cd, Cg), the height of the flank being designed to provide satisfactory mechanical strength, the thickness (e) of the flank (18d, 18g) being such that the setting of a narrow tractor crawler track is not impeded.

2. Equipment according to Claim 1, **characterized in that** the flank (18d, 18g) has a thickness (e) not exceeding 50 millimeters, particularly not exceeding 30 millimeters.

3. Equipment according to Claim 1 or 2, **characterized in that** the flank (18d, 18g) passes over and bears on the intermediate girder (1) and is continued rearward to be connected to the rear axle (4).

4. Equipment according to one of Claims 1 to 3, **characterized in that** the flank (18d, 18g) is formed of two parts (18da, 18dr ; 18ga, 18 gr) assembled by a joint (J), particularly an inclined joint.

5. Equipment according to Claim 4, **characterized in that** the joint is located approximately at the level of the intermediate girder (1) and **in that** the part (18da, 18ga) of the flank located forward of the joint (J) is thicker than the part (18dr, 18gr) of the flank located to the rear of the joint (J).

6. Equipment according to one of the preceding claims, **characterized in that** the front lift (R) comprises a supporting structure (6), particularly in the shape of an inverted U, carrying the three hitching points (7, 8, 9) for an implement, this supporting structure (6) being articulated (10), on each side, at the bottom rear part, to one end of a longeron (lid, 11g) which is articulated at its other end to a pivot (12d, 12g) carried by the framework of the tractor, the supporting structure (6) being held on each side by a tensioning means (14d, 14g), particularly a tensioning screw, provided between a high point (15) on the supporting structure (6) and a point (16) secured to the longeron (11d, 11g), the connecting means (L) being formed of rams (21) allowing the raising or lowering of the longerons (11d, 11g), and the supporting structure (6).

7. Equipment according to Claim 6, **characterized in that** the tensioning screws (14d, 14g) are equipped with a sliding part to allow longitudinal following of the relief.

8. Equipment according to Claim 7, **characterized in that** a stiffening connection between the longerons is formed by crossed tensioning screws (23a, 23b) connected respectively at each end to the longerons (11d, 11g) by an articulation which allows relative vertical movement of the longerons (11d, 11g) for transverse following of the relief.

9. Equipment according to one of Claims 1 to 6, **characterized in that** a lift (24) with rams (28d, 28g) and articulated arms (26) is fixed to the front of the tractor, the articulation (27) of the arms being located at the front of the tractor, and **in that** the connecting means (L) are provided between the front top end (19d, 19g) of the flank and a point of attachment (31d, 31g) located further forward and lower down, secured to the framework of the tractor.

10. Equipment according to Claim 9, **characterized in that** the connecting means (L ; 32d, 32g ; 36d, 36g) converge from the rear forward.

11. Equipment according to Claim 9 or 10, **characterized in that** a link rod (35) articulated, particularly on a ball joint, at each end, establishes a transverse connection between the top front end (19d, 19g) of the flank and a point (P) on the framework of the tractor.

12. Equipment according to one of Claims 9 to 11, **characterized in that** the connecting means (L) comprise, on each side, a rigid bar (32d, 32g), particularly a preloaded one.

13. Equipment according to one of Claims 9 to 11, **characterized in that** the connecting means (L) comprise, on each side, a ram (36d, 36g) supplied in parallel with the rams (28d, 28g) of the lift (24).

14. Equipment according to Claim 13, **characterized in that** a pressure sensor (37) and a nonreturn valve (41) controlled by the pressure sensor (37) are located on the supply line (38, 42) of the ram (36d, 36g) forming the connecting means, so as to cut the communication with the lift ram (28d, 28g) when a given pressure value is exceeded.

15. Equipment according to Claim 13 or 14, **characterized in that** a double nonreturn valve driven hydraulically (46d, 46g) is installed on each tensioning ram (36d, 36g).

16. Crawler tractor for agricultural use, **characterized in that** it is equipped with front lift equipment according to one of Claims 1 to 15.

## Patentansprüche

1. Vordere Hebevorrichtung für einen Raupenschlepper für landwirtschaftliche Zwecke, mit einem erheblichen Versatz seines vorderen Teils in bezug auf einen mittleren Querträger, an dem auf beiden Seiten ein Raupenfahrwerk angebracht ist, das zum Einstellen der Spur des Schleppers in Querrichtung verstellbar ist, wobei am hinteren Ende des Schleppers eine Achse vorgesehen ist, wobei die Vorrichtung ein Verstärkungsorgan, das auf beiden Seiten des Schleppers angeordnet und am Mittelträger sowie an der hinteren Achse befestigt ist, und Verbindungseinrichtungen zwischen dem Verstärkungsorgan und einem Eingriffspunkt eines Teils aufweist, das den von einer auf die vordere Hebevorrichtung einwirkenden Last erzeugten Belastungen ausgesetzt ist, und wobei jedes Verstärkungsorgan eine Seitenwand (18d, 18g) mit reduzierter Dicke (e) aufweist, die im wesentlichen parallel zur vertikalen Mittelebene des Schleppers verläuft und dem Schlepperkörper auf der Innenseite der Raupenketten (Cd, Cg) benachbart ist, wobei die Höhe der Seitenwand derart ausgebildet ist, daß eine zufriedenstellende mechanische Festigkeit gewährleistet ist, wobei die Dicke (e) der Seitenwand (18d, 18g) derart ist, daß eine Einstellung einer schmalen Spur der Raupenketten des Schleppers nicht behindert wird.

2. Vorrichtung nach Anspruch 1, **dadurch gekennzeichnet, daß** die Seitenwand (18d, 18g) eine Dicke (e) von nicht mehr als 50 Millimeter, insbesondere nicht mehr als 30 Millimeter hat.

3. Vorrichtung nach Anspruch 1 oder 2, **dadurch gekennzeichnet, daß** die Seitenwand (18d, 18g) über den Mittelträger (1) und sich an diesem abstützend verläuft und zur Verbindung mit der Hinterachse (4) nach hinten verlängert ist.

4. Vorrichtung nach einem der Ansprüche 1 bis 3, **dadurch gekennzeichnet, daß** die Seitenwand (18d, 18g) aus zwei Teilen (18da, 18dr; 18ga, 18gr) gebildet ist, die durch ein vorzugsweise geneigtes Verbindungsgelenk (J) verbunden sind.

5. Vorrichtung nach Anspruch 4, **dadurch gekennzeichnet, daß** das Verbindungsglied im wesentlichen auf der Höhe des Mittelträgers (1) angeordnet ist und der Teil (18da, 18ga) der Seitenwand, der vor dem Gelenk (J) liegt, dicker ist als der Teil (18dr, 18gr) der Flanke, der hinter dem Gelenk (J) liegt.

6. Vorrichtung nach einem der vorhergehenden Ansprüche, **dadurch gekennzeichnet, daß** das vordere Hebezeug (R) ein Gestell (6), insbesondere in Form eines umgekehrten U, aufweist, welches die drei Eingriffspunkte (7, 8, 9) für ein Werkzeug trägt, wobei das Gestell (6) auf jeder Seite im unteren hinteren Teil an ein Ende eines Holms (11d, 11g) angelenkt ist, welcher an seinem anderen Ende an einem vom Rahmen des Schleppers gestützten Schwenkzapfen (12d, 12g) angelenkt ist, wobei das Gestell (6) auf jeder Seite von einer Spanneinrichtung (14d, 14g), insbesondere einer Spannschraube, gehalten ist, die zwischen einem oberen Punkt (15) des Gestells (6) und einem am Holm (11d, 11g) festen Punkt (16) vorgesehen ist, wobei Verbindungseinrichtungen (L) durch Hubzylinder (21) gebildet sind, die das Anheben oder Senken der Holme (11d, 11g) und des Gestells (6) ermöglichen.

7. Vorrichtung nach Anspruch 6, **dadurch gekennzeichnet, daß** die Spannschrauben (14d, 14g) mit einem gleitenden Teil versehen sind, um dem Relief in Längsrichtung folgen zu können.

8. Vorrichtung nach Anspruch 7, **dadurch gekennzeichnet, daß** eine Versteifungsverbindung zwischen den Holmen durch gekreuzte Spannschrauben (23a, 23b) gebildet ist, welche an jedem Ende mit einem jeweiligen Holm (13d, 13g) durch ein Gelenk verbunden sind, das eine vertikale Relativbewegung der Holme (11d, 11g) ermöglicht, um dem Relief in Querrichtung folgen zu können.

9. Vorrichtung nach einem der Ansprüche 1 bis 6, **dadurch gekennzeichnet, daß** ein Hebezeug (24) mit gelenkig angebrachten Hubzylindern (28d, 28g) und Armen (26) an der Vorderseite des Schleppers angebracht ist, wobei die Gelenke (27) der Arme an der Vorderseite des Schleppers angeordnet sind, und wobei die Verbindungseinrichtungen (L) zwischen dem vorderen oberen Ende (19d, 19g) der Seitenwand und einem Eingriffspunkt (31d, 31g) angeordnet sind, der weiter vorn und weiter unten liegt und mit dem Rahmen des Schleppers fest verbunden ist.

10. Vorrichtung nach Anspruch 9, **dadurch gekennzeichnet, daß** die Verbindungseinrichtungen (L; 32d, 32g; 36d, 36g) von vorn nach hinten zusammenlaufen.

11. Vorrichtung nach Anspruch 9 oder 10, **dadurch gekennzeichnet, daß** eine an jedem Ende insbesondere an einem Kugelgelenk angelenkte Pleuelstange (35) eine transversale Verbindung zwischen dem vorderen oberen Ende (19d, 19g) der Flanke und einem Punkt (P) des Rahmens des Schleppers bildet.

12. Vorrichtung nach einem der Ansprüche 9 bis 11, **dadurch gekennzeichnet, daß** die Verbindungseinrichtungen (L) auf jeder Seite eine starre Stange (32d, 32g) aufweisen, die insbesondere vorgespannt ist.

13. Vorrichtung nach einem der Ansprüche 9 bis 11, **dadurch gekennzeichnet, daß** die Verbindungseinrichtungen (L) auf jeder Seite einen Hubzylinder (36d, 36g) aufweist, der parallel zu den Hubzylindern (28d, 28g) des Hebezeugs (24) gespeist wird.

14. Vorrichtung nach Anspruch 13,dadurch gekenzeichnet, daß ein Drucksensor (37) und ein Rückschlagventil (41), das vom Drucksensor (37) gesteuert ist, in dem Versorgungskanal (38, 42) des eine Verbindungseinrichtung bildenden Hubzylinders (36d,36g) derart angeordnet sind, daß sie die Verbindung zum Hebezeugzylinder (28d, 28g) unterbrechen können, wenn ein bestimmter Druckwert überschritten wird.

15. Vorrichtung nach Anspruch 13 oder 14, **dadurch gekennzeichnet, daß** ein hydraulisch gesteuertes Doppel-Rückschlagventil (46d, 46g) an jedem Spannkolben (36d, 36g) angebracht ist.

16. Raupenschlepper für landwirtschaftliche Zwecke, **dadurch gekennzeichnet, daß** er mit einer vorderen Hebevorrichtung nach einem der Ansprüche 1 bis 15 versehen ist.
